(19) Europäisches Patentamt
European Patent Office
Office européen des brevets

(11) **EP 3 511 584 B1**

(12) **EUROPÄISCHE PATENTSCHRIFT**

(45) Veröffentlichungstag und Bekanntmachung des Hinweises auf die Patenterteilung:
**22.07.2020   Patentblatt 2020/30**

(51) Int Cl.:
*F16C 32/04* *(2006.01)*      *G01B 7/14* *(2006.01)*

(21) Anmeldenummer: **18151629.5**

(22) Anmeldetag: **15.01.2018**

(54) **VERFAHREN ZUR ÜBERWACHUNG EINER MAGNETLAGERVORRICHTUNG**

METHOD FOR MONITORING A MAGNETIC BEARING DEVICE

PROCÉDÉ DE SURVEILLANCE D'UN DISPOSITIF DE PALIER MAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.07.2019   Patentblatt 2019/29**

(73) Patentinhaber: **Siemens Aktiengesellschaft**
**80333 München (DE)**

(72) Erfinder:
• **Denk, Joachim**
  **10781 Berlin (DE)**
• **Köhler, Bert-Uwe**
  **14612 Falkensee (DE)**
• **Stoiber, Dietmar**
  **90763 Fürth (DE)**
• **Viering, Frank**
  **90763 Fürth (DE)**

(56) Entgegenhaltungen:
EP-A1- 2 644 917      EP-A1- 2 781 774
JP-A- H11 166 533     JP-A- S59 187 113
JP-A- 2006 029 453    JP-A- 2007 263 251

EP 3 511 584 B1

**Beschreibung**

Die Erfindung betrifft ein Verfahren zur Überwachung einer Magnetlagervorrichtung.

Darüber hinaus betrifft die Erfindung eine Steuereinheit programmiert und mit Mitteln zur Durchführung eines derartigen Verfahrens.

Ferner betrifft die Erfindung ein Computerprogramm zur Durchführung eines derartigen Verfahrens bei Ablauf in einer Steuereinheit.

Die Erfindung betrifft überdies ein Computerprogrammprodukt mit einem Computerprogramm.

Des Weiteren betrifft die Erfindung eine Sensorvorrichtung zur Durchführung eines derartigen Verfahrens.

Zudem betrifft die Erfindung eine Magnetlagervorrichtung mit mindestens einem Magnetlager und mindestens einer Sensorvorrichtung.

Die Erfindung betrifft außerdem eine elektrische rotierende Maschine mit mindestens einer Magnetlagervorrichtung.

Ein derartiges Verfahren wird insbesondere in einem aktiven Magnetlager einer schnell drehenden elektrischen rotierenden Maschine, beispielsweise eines Motors, eines Generators, eines Kompressors oder einer Turbine, eingesetzt. Beispielsweise ist die schnell drehende elektrische rotierende Maschine mit einer Leistung von mindestens 1 Megawatt und einer Drehzahl von mindestens 5000 U/min betreibbar, die Erfindung ist jedoch nicht auf derartige Maschinen beschränkt.

Eine Lageregelung eines aktiven Magnetlagers erfolgt mit Hilfe von Lagemesswerten zur Position des Drehkörpers. Der Drehkörper ist beispielsweise ein Rotor der elektrischen rotierenden Maschine. Die Lagemesswerte werden mit Abstandssensoren erfasst. Die Lageregelung bekommt als Eingangssignal die Position des Rotors basierend auf den von den Sensoren erfassten Messsignalen. Liefern die Abstandssensoren falsche Signale, entfernt sich der Rotor aufgrund der Lageregelung aus der gewünschten Position. Es ist erforderlich, einen Fehler eines Positionssensors, der zu einer Fehlmessung, beispielsweise durch thermische Sensordrift, führt, unbedingt frühzeitig zu erkennen, um ein Schweben an einer falschen Stelle auszuschließen. Neben der Sensordrift sind Messfehler auf Grund einer Aufweitung des Drehkörpers, beispielswiese durch Fliehkräfte oder Temperatur, bei einer Lagebestimmung eines Drehkörpers in einem aktiven Magnetlager zu kompensieren.

Die Patentschriften DE 10 2009 039 485 B4 und EP 2 644 917 A1 beschreiben ein Regelungssystem und Verfahren zur Regelung eines Magnetlagers. Die Offenlegungsschrift DE 42 15 381 A1 beschreibt eine Anordnung mit zwei Sensoreinheiten zur radialen und/oder zur axialen Positionserfassung einer Welle, die jeweils zumindest aus einem Paar etwa diametral gegenüberliegender Sensoren bestehen.

Die Offenlegungsschrift EP 3 203 191 A1 beschreibt eine Sensorvorrichtung für eine Magnetlagervorrichtung, welche einen Verschiebungssensor und einen Sensorring aufweist.

Der Erfindung liegt die Aufgabe zugrunde, die Überwachung der Lagebestimmung eines Drehkörpers in einem aktiven Magnetlager zu verbessern.

Diese Aufgabe wird erfindungsgemäß durch ein Verfahren zur Überwachung einer Magnetlagervorrichtung für eine elektrische rotierende Maschine gelöst, welche ein erstes Paar zumindest im Wesentlichen diametral gegenüberliegender Sensoren und ein zweites Paar zumindest im Wesentlichen diametral gegenüberliegender Sensoren aufweist, welche zum ersten Paar Sensoren um einen Winkel versetzt angeordnet sind, wobei jeweils ein Abstand eines Sensors zu einem Drehkörper, welcher innerhalb der Sensorpaare angeordnet ist, gemessen wird, wobei ein erster mittlerer Abstand aus den Abstandswerten des ersten Sensorpaares und ein zweiter mittlerer Abstand aus den Abstandswerten des zweiten Sensorpaares ermittelt wird, wobei eine erste Änderung des ersten mittleren Abstandes und eine zweite Änderung des zweiten mittleren Abstandes erfasst werden, wobei die Änderungen der mittleren Abstände verglichen werden, wobei, sobald ein Unterschied der mittleren Abstandsänderungen einen Grenzwert überschreitet, ein Warnsignal ausgegeben wird.

Ferner wird die Aufgabe erfindungsgemäß durch eine Steuereinheit, ein Computerprogramm, ein Computerprogrammprodukt, eine Sensorvorrichtung, eine Magnetlagervorrichtung und eine elektrische rotierende Maschine mit den in den Ansprüchen 9 bis 14 angegebenen Merkmalen gelöst.

Die in Bezug auf das Verfahren nachstehend angeführten Vorteile und bevorzugten Ausgestaltungen lassen sich sinngemäß auf die Steuereinheit, das Computerprogramm, das Computerprogrammprodukt, die Sensorvorrichtung, die Magnetlagervorrichtung und die elektrische rotierende Maschine übertragen.

Der Erfindung liegt die Überlegung zugrunde, bei einem aktiven Magnetlager, welches insbesondere als Radiallager und/oder als Axiallager ausgeführt ist, eine Sensorauswertung zweier unabhängig geregelter Sensorachsen, welche um einen Winkel versetzt zueinander angeordnet sind, zu verknüpfen, um damit sowohl bei drehendem als auch bei stehendem Rotor zu erkennen, ob die Abstandssensorik fehlerbehaftete Werte liefert. Im Fehlerfall sind geeignete Sicherheitsmaßnahmen einleitbar. Fehlerbehaftete Werte liefert die Sensorik beispielsweise bei einer, insbesondere thermischen, Sensordrift zumindest eines Sensors. Aus den ermittelten Abstandswerten der einander gegenüber angeordneten Sensoren wird eine mittlere Abstandsänderung im Vergleich zu einem gespeicherten Datensatz ermittelt, wobei die mittlere Abstandsänderung der halben Summe der Abstandsänderungen der beiden gegenüberliegenden Sensoren entspricht. Eine Abstandsänderung entspricht der Differenz der ermittelten Abstände der Messung und den Abständen des Datensatzes. Der vorhergehende Datensatz basiert beispielsweise auf einer Simulation. Überschreitet der Unterschied der Abstandsänderungen $\Delta d1$, $\Delta d2$ einen Grenzwert, so liegt zumindest ein Sensorfehler vor. Ein derartiger Sensorfehler wird beispielsweise über ein Fehlersignal ermittelt. Der Grenzwert ist so zu wählen, dass eine Fehlauslösung vermieden wird, aber dennoch zuverlässig eine Kollision des Drehkörpers mit beispielsweise einem Fanglager verhindert wird

Eine thermische oder fliehkraftinduzierte Rotoraufweitung ist unproblematisch, da die Aufweitung zumindest im Wesentlichen gleichmäßig in Radialrichtung stattfindet. Da bei der Fehlerdetektion die Änderungen der mittleren Abstände und keine Absolutwerte verglichen werden, ist das Verfahren einfach und robust gegenüber äußeren Einflüssen. Durch eine kombinierte Auswertung beider Sensorachsen wird eine Sensorüberwachung ohne zusätzliche Sensorik ermöglicht. Daher ist die Überwachung der Sensordaten preiswert und wirkungsvoll umsetzbar.

Durch eine Steuereinheit wird der Verfahrensablauf gesteuert. Die Mittel zur Durchführung eines derartigen Verfahrens umfassen ein Computerprogramm und beispielweise einen Mikrocontroller oder einen anderen programmierbaren Logikbaustein. Die Steuereinheit ist beispielsweise in der Sensorvorrichtung angeordnet.

Das ausgegebene Warnsignal ist beispielsweise als ein akustisches, optisches und/oder elektrisches Signal ausgeführt. Die elektrische rotierende Maschine ist beispielsweise ein Motor, ein Generator, ein Kompressor oder eine Turbine. Insbesondere ist die elektrische rotierende Maschine mit einer Leistung von mindestens 1 Megawatt und einer Drehzahl von mindestens 5000 U/min betreibbar.

Bei einer bevorzugten Ausgestaltung werden die Änderungen auf eine vorhergehende Messung bezogen. Die Messdaten einer vorhergehenden Messung sind, insbesondere im Vergleich zu einer Simulation, sehr genau, da in der Messung zumindest zeitlich konstante Rahmenbedingungen und Umwelteinflüsse berücksichtigt sind, wodurch eine zuverlässige Fehlerdetektion ermöglicht wird.

In einer weiteren vorteilhaften Ausgestaltung ist die vorhergehende Messung eine Kalibrierungsmessung. Bei einer derartigen Kalibrierungsmessung wird der Drehkörper in einer Referenzposition angeordnet. Dadurch ist ein höherer Grenzwert wählbar, wodurch die Zuverlässigkeit der Fehlerdetektion verbessert wird.

In einer bevorzugten Ausführungsform wird die Position des Drehkörpers bei der Kalibrierungsmessung so geregelt, dass die Abstände der Sensoren zum Drehkörper gleich sind und einem Normabstand entsprechen. Durch eine mittige Positionierung des Drehkörpers wird die Wahrscheinlichkeit einer Kollision verringert und die Zuverlässigkeit der Fehlerdetektion verbessert.

Besonders vorteilhaft sind die Sensoren als induktive Verschiebungssensoren ausgeführt, durch welche die Abstände kontaktlos erfasst werden. Ein induktiver Verschiebungssensor wird auch Wirbelstromsensor genannt. Derartige Sensoren sind sehr genau, kostengünstig und zuverlässig.

In einer weiteren vorteilhaften Ausgestaltung ist das zweite Paar der diametral gegenüberliegenden Sensoren um einen Winkel von 60° bis 120° gedreht zum ersten Paar der diametral gegenüberliegenden Sensoren angeordnet. Durch eine derartige Anordnung der Sensorachsen wird eine Auswertung der Messungen erleichtert.

Besonders vorteilhaft wird das zweite Paar der diametral gegenüberliegenden Sensoren zumindest im Wesentlichen senkrecht zum ersten Paar der diametral gegenüberliegenden Sensoren angeordnet. Durch eine derartige Anordnung der Sensorachsen wird eine Auswertung der Messungen erleichtert.

Bei einer weiteren vorteilhaften Ausführungsform wird zumindest ein redundanter Sensor im Bereich eines der Sensoren angeordnet, wobei ein Abstand des zumindest einen redundanten Sensors zum Drehkörper ermittelt wird. Mit zumindest einem zusätzlichen Sensor ist, über die Inkonsistenz der Sensorik hinaus, ein defekter Sensor detektierbar.

Besonders vorteilhaft wird ein defekter Sensor durch einen Vergleich der ermittelten Abstände detektiert. Da für die Sensoren der betroffenen Achse und den am nächsten benachbarten redundanten Sensor hinsichtlich der Entfernung zum Drehkörper im Wesentlichen identische Rahmenbedingungen gelten, ist mit einem Vergleich der Abstände der am nächsten benachbarten Sensoren insbesondere eine Achse mit einem defekten Sensor erkennbar und durch Umschalten der Regelung von dem dem redundanten Sensor benachbarten Sensor auf den redundanten Sensor ist der defekte Sensor selbst detektierbar. Durch eine derartige unmittelbare Identifizierung eines defekten Sensors ohne weitere Messungen wird eine Stillstandzeit der elektrischen rotierenden Maschine verringert und damit die Verfügbarkeit der Maschine verbessert.

Im Folgenden wird die Erfindung anhand der in den Figuren dargestellten Ausführungsbeispiele näher beschrieben und erläutert.

Es zeigen:

FIG 1    einen Längsschnitt einer elektrischen rotierenden Maschine,

FIG 2    einen Querschnitt durch eine Magnetlagervorrichtung mit einer ersten Ausführungsform einer Sensorvorrichtung,

FIG 3    einen Querschnitt durch eine Magnetlagervorrichtung mit einer ersten Ausführungsform einer Sensorvorrichtung mit einer Verschiebung des Drehkörpers bezüglich einer Kalibrierungsmessung und

FIG 4    einen Querschnitt durch eine Magnetlagervorrichtung mit einer zweiten Ausführungsform einer Sensorvorrichtung.

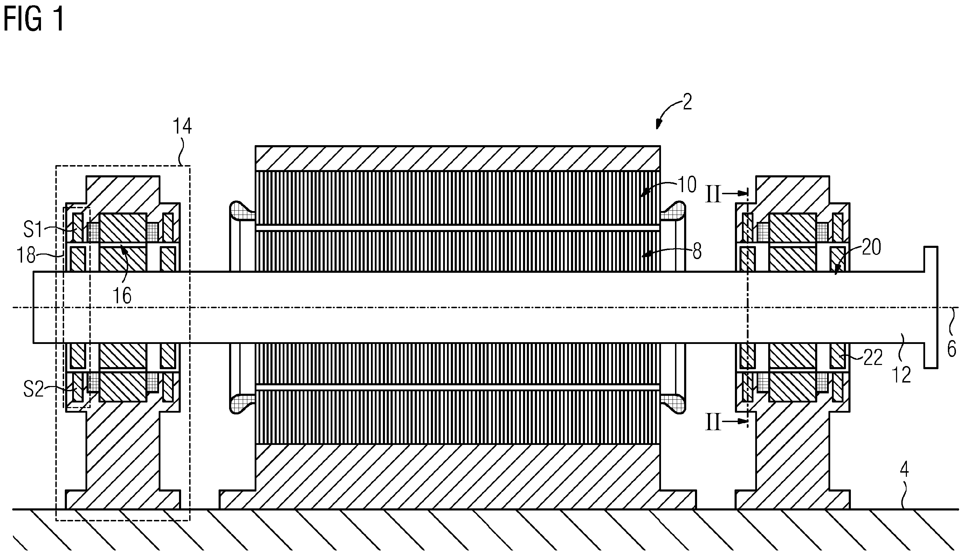

FIG 1 zeigt eine elektrische rotierende Maschine 2, welche auf einem Fundament 4 steht. Die elektrische rotierende Maschine 2 ist als Motor oder als Generator ausgeführt und weist einen um eine Rotationsachse 6 rotierbaren Rotor 8 und einen den Rotor 8 umgebenden Stator 10 auf. Eine Welle 12 des Rotors 8 ist an beiden axialen Enden durch jeweils eine aktive Magnetlagervorrichtung 14 berührungslos gelagert. Alternativ ist die elektrische rotierende Maschine 2 als Turbine mit einer Welle 12 ausgeführt, welche an den axialen Enden durch jeweils eine aktive Magnetlagervorrichtung 14 berührungslos gelagert ist.

Über eine Sensorvorrichtung 18 wird eine Lage eines Drehkörpers 20 ermittelt, wobei der Drehkörper 20 den Rotor 8 mit der Welle 12 umfasst. Optional weist der Drehkörper 20 im Bereich der Sensorvorrichtung 18 einen Sensorring 22 auf, welcher mit der Welle 12 verbunden ist. Beispielsweise ist der Sensorring 22 mit der Welle 12 stoffschlüssig verbunden oder auf die Welle 12 aufgeschrumpft. Der Drehkörper 20 weist einen zumindest im Wesentlichen kreisförmigen Querschnitt auf.

Die Sensorvorrichtung umfasst um den Umfang der Welle 12 herum angeordnete Sensoren S1, S2, welche als induktive Verschiebungssensoren ausgestaltet und dafür geeignet sind, Abstände des Drehkörpers 20 zu den jeweiligen Sensoren S1, S2 kontaktlos zu erfassen. Die induktiven Verschiebungssensoren werden beispielsweise dazu herangezogen, über einen Luftspalt eine Impedanz und bevorzugt eine Änderung der Impedanz zu messen.

Die Magnetlagervorrichtung 14 ist exemplarisch als Radiallager ausgeführt. Eine Verwendung der Sensorvorrichtung 18 für ein Axiallager ist ebenfalls Gegenstand der Patentanmeldung, wobei im Falle eines Axiallagers die Sensorvorrichtung 18 dafür vorgesehen ist, die Position des Drehkörpers 20 in axialer Richtung zu ermitteln.

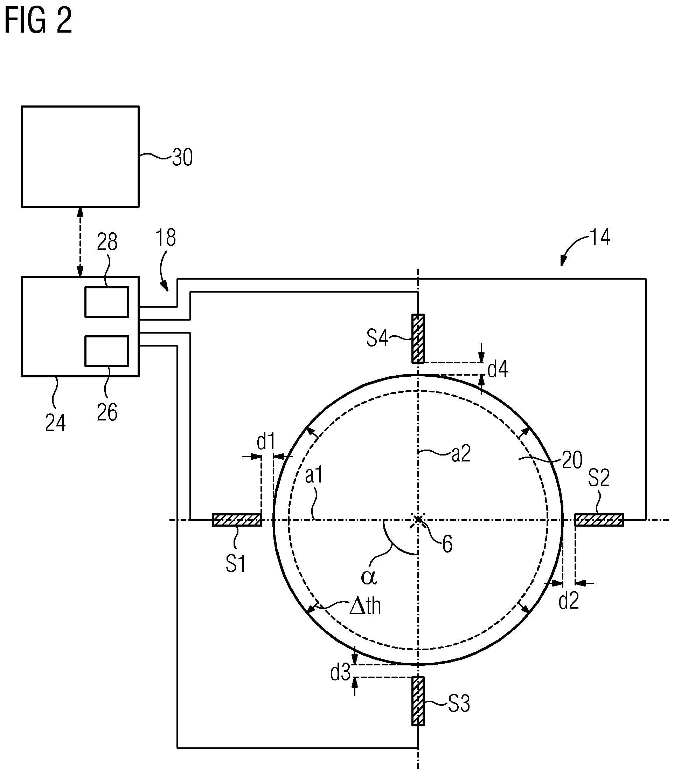

FIG 2 zeigt einen Querschnitt durch eine Magnetlagervorrichtung 14 mit einer ersten Ausführungsform einer Sensorvorrichtung 18, wobei ein Drehkörper 20 durch die Magnetlagervorrichtung 14 berührungslos gelagert ist. Die Sensorvorrichtung 18 umfasst zwei Paar der diametral gegenüberliegenden Sensoren S1, S2, S3, S4, welche jeweils eine Achse a1, a2 bilden, wobei die zweite Achse a2 des zweiten Paares S3, S4 um einen Winkel $\alpha$ von näherungsweise 90° zur ersten Achse a1 des ersten Paares S1, S2 gedreht angeordnet ist. Die Sensoren S1, S2, S3, S4 sind mit einer Zentraleinheit 24 verbunden, welche eine Auswerteeinheit 26 und eine Steuereinheit 28 umfasst. Eine Übertragung der gemessenen Sensordaten an die Zentraleinheit 24 erfolgt beispielsweise elektrisch, insbesondere kabelgebunden, oder optisch über Lichtleiter. Die Sensoren S1, S2, S3, S4 sind als induktive Verschiebungssensoren ausgeführt, durch welche jeweils die Abstände d1, d2, d3, d4 des jeweiligen Sensors S1, S2, S3, S4 zum Drehkörper 20 kontaktlos erfasst werden. Die ermittelten Daten werden digitalisiert und zumindest teilweise an eine IT-Infrastruktur 30 gesendet. Eine IT-Infrastruktur 30 ist beispielsweise mindestens ein lokales Computersystem oder eine Cloud und stellt Speicherplatz, Rechenleistung und Anwendungssoftware bereit. In einer Cloud werden Speicherplatz, Rechenleistung und Anwendungssoftware als Dienstleistung über das Internet zur Verfügung gestellt. Die digitale Datenübertragung an die IT-Infrastruktur 30 findet drahtlos, drahtgebunden oder optisch statt. Beispielswiese werden die Daten über Bluetooth oder WLAN übertragen.

Zur Überprüfung, ob ein Sensor einen falschen Wert ausgibt, wird ein erster mittlerer Abstand aus den Abstandswerten des ersten Sensorpaares S1, S2 und ein zweiter mittlerer Abstand aus den Abstandswerten des zweiten Sensorpaares S3, S4 ermittelt, wobei eine erste Änderung $\Delta$d1 des ersten mittleren Abstandes und eine zweite Änderung $\Delta$d2 des zweiten mittleren Abstandes im Vergleich zu einer vorhergehenden Messung erfasst werden. Daraufhin werden die Änderungen $\Delta$d1, $\Delta$d2 der mittleren Abstände verglichen, wobei, sobald ein Unterschied der Abstandsänderungen $\Delta$d1, $\Delta$d2 einen Grenzwert überschreitet, ein Warnsignal ausgegeben wird. Der Grenzwert ist so zu wählen, dass eine Fehlauslösung vermieden wird, aber dennoch zuverlässig eine Kollision des Drehkörpers 20 mit beispielsweise einem Fanglager verhindert wird.

Das Warnsignal ist beispielsweise als ein akustisches, optisches und/oder elektrisches Signal ausgeführt, wobei bei der Ausgabe eines Warnsignals beispielsweise die elektrische rotierende Maschine 2 in einen sicheren Zustand überführt wird.

Eine während des Betriebes der elektrischen rotierenden Maschine auftretende thermische Rotoraufweitung $\Delta$th, d.h. eine durch eine Erwärmung des Rotors 8 verursachte leichte, aber gleichmäßige Vergrößerung des Drehkörperdurchmessers, ist unproblematisch für die oben beschriebene Überprüfung, weil Änderungen $\Delta$d1, $\Delta$d2 der mittleren Abstände verglichen werden und kein Vergleich von Absolutwerten erfolgt. Eine Anwendung auf Axiallager ist möglich. Die weitere Ausführung der Magnetlagervorrichtung 14 in FIG 2 entspricht der in FIG 1.

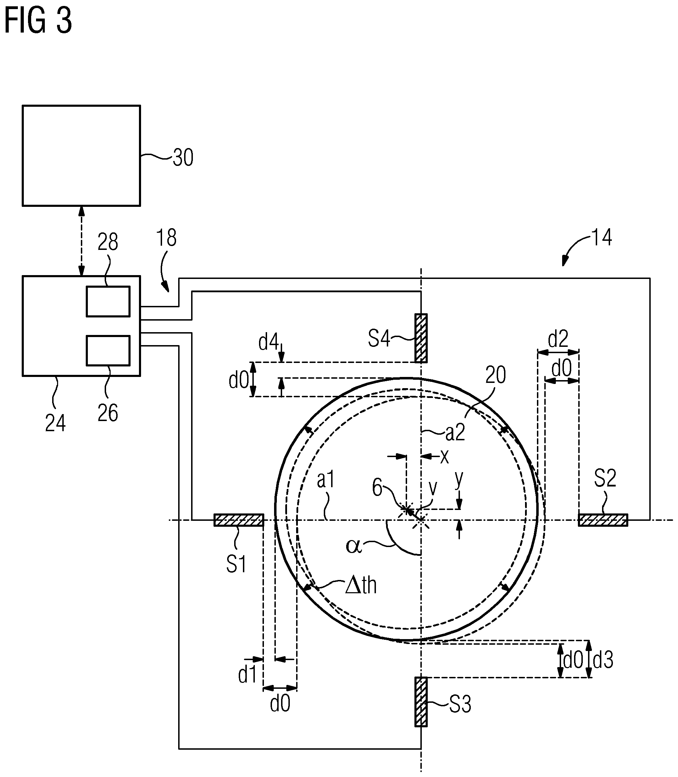

FIG 3 zeigt einen Querschnitt durch eine Magnetlagervorrichtung 14 mit einer ersten Ausführungsform einer Sensorvorrichtung 18 und mit einer Verschiebung V des Drehkörpers 20 bezüglich einer Kalibrierungsmessung. Die Verschiebung V des Drehkörpers 20 ist sehr klein gegenüber der im Wesentlichen kreisförmigen Krümmung der Oberfläche des Drehkörpers 20 in Umfangsrichtung, sodass die Oberfläche des Drehkörpers 20 im Bereich der Verschiebung V als im Wesentlichen gerade anzunehmen ist.

Die Position des Drehkörpers 20 bei der Kalibrierungsmessung wurde so geregelt, dass die Abstände d1, d2, d3, d4 der Sensoren S1, S2, S3, S4 zum Drehkörper 20 gleich sind und einem Normabstand d0 entsprechen. Die Rotationsachse 6 des Drehkörpers 20 ist bezüglich der ersten Achse a1 um x in Richtung des ersten Sensors S1 und bezüglich der zweiten Achse a2 um y in Richtung des vierten Sensors S4 verschoben. Ferner fand seit der Kalibrierungsmessung eine Rotoraufweitung Δth statt. Ein beispielhafter Messfehler im ersten Sensor S1 wird durch einen Fehlerwert ε modelliert.

Die Sensoren S1, S2, S3, S4 liefern folgende Abstände d1, d2, d3, d4 im Vergleich zum Normabstand d0:

$$d1 \;=\; d0 \,-\, x \,-\, \Delta th \,\pm\, \varepsilon$$

$$d2 \;=\; d0 \,+\, x \,-\, \Delta th$$

$$d3 \;=\; d0 \,+\, y \,-\, \Delta th$$

$$d4 \;=\; d0 \,-\, y \,-\, \Delta th$$

Daraus ergeben sich folgende mittleren Abstandsänderungen Δd1, Δd2:

$$\Delta d1 \;=\; \frac{(d1 - d0) + (d2 - d0)}{2} \;=\; \frac{-x - \Delta th \pm \varepsilon + x - \Delta th}{2} \;=\; -\Delta th \pm \frac{\varepsilon}{2}$$

$$\Delta d2 \;=\; \frac{(d3 - d0) + (d4 - d0)}{2} \;=\; \frac{y - \Delta th - y - \Delta th}{2} \;=\; -\Delta th$$

Der Vergleich der mittleren Abstände Δd1, Δd2 zeigt, dass ein Sensorfehler vorliegt, da sich der erste mittlere Abstand Δd1 vom zweiten mittleren Abstand Δd2 um ±ε/2 unterscheidet. Darüber hinaus zeigt die Rechnung, dass das Verfahren unempfindlich gegen eine, möglicherweise sogar gewünschte, Verschiebung V des Drehkörpers 20 ist. Die thermische Rotoraufweitung Δth ist bei der Detektion eines Sensorfehlers über einen Vergleich der Änderungen Δd1, Δd2 der mittleren Abstände unproblematisch, weil die Rotoraufweitung Δth in alle Richtungen gleichmäßig erfolgt. Sollte die Bezugsmessung keine oben beschriebene Kalibrierungsmessung sein, das heißt die Abstände d1, d2, d3, d4 der Sensoren S1, S2, S3, S4 zum Drehkörper 20 sind zum Zeitpunkt der Kalibrierung nicht gleich d0, so funktioniert das Verfahren dennoch, da Änderungen der mittleren Abstände Δd1, Δd2 verglichen werden. Die weitere Ausführung der Magnetlagervorrichtung 14 in FIG 3 entspricht der in FIG 1.

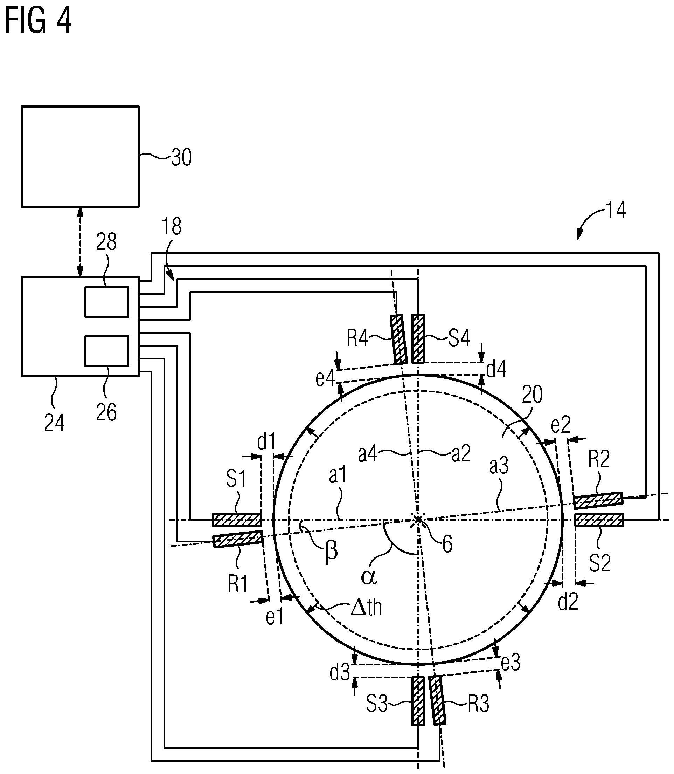

FIG 4 zeigt einen Querschnitt durch eine Magnetlagervorrichtung 14 mit einer zweiten Ausführungsform einer Sensorvorrichtung 18. Den Sensoren S1, S2, S3, S4 ist jeweils ein redundanter Sensor R1, R2, R3, R4 zugeordnet, um über eine mögliche Inkonsistenz der Sensorik hinaus auch direkt einen fehlerhaft arbeitenden Sensor zu detektieren. Die redundanten Sensoren R1, R2, R3, R4 sind paarweise diametral gegenüberliegend angeordnet, wobei die Paare jeweils eine Achse ausbilden. Die Achsen a3, a4 der redundanten Sensoren R1, R2, R3, R4 sind um einen Versatzwinkel β im Bereich von bis zu 10° zu den Achsen a1, a2 der Sensoren S1, S2, S3, S4 gedreht angeordnet. Für die Sensoren S1, S2, S3 S4 und ihre am nächsten benachbarten redundanten Sensoren R1, R2, R3, R4 gelten hinsichtlich der Entfernung zum Drehkörper 20 die im Wesentlichen identischen Rahmenbedingungen.

Die Abstände e1, e2, e3, e4 der redundanten Sensoren R1, R2, R3, R4 zum Drehkörper 20 werden ermittelt, wobei ein fehlerhafter Sensor S1, S2, S3, S4, R1, R2, R3, R4 durch einen Vergleich der ermittelten Abstände d1, d2, d3, d4, e1, e2, e3, e4 detektiert wird. Die weitere Ausführung der Magnetlagervorrichtung 14 in FIG 4 entspricht der in FIG 2.

Zusammenfassend betrifft die Erfindung ein Verfahren zur Überwachung einer Magnetlagervorrichtung 14 für eine elektrische rotierende Maschine 2. Um eine Überwachung der Lagebestimmung eines Drehkörpers in einem aktiven Magnetlager zu verbessern, wird vorgeschlagen, dass die Magnetlagervorrichtung 14 ein erstes Paar zumindest im Wesentlichen diametral gegenüberliegender Sensoren S1, S2 und ein zweites Paar zumindest im Wesentlichen diametral

**EP 3 511 584 B1**

gegenüberliegender Sensoren S3, S4, welche zum ersten Paar Sensoren S1, S2 um einen Winkel $\alpha$ versetzt angeordnet sind, aufweist, wobei jeweils ein Abstand d1, d2, d3, d4 eines Sensors S1, S2, S3, S4 zu einem Drehkörper 20, welcher innerhalb der Sensorpaare S1, S2, S3, S4 angeordnet ist, gemessen wird, wobei ein erster mittlerer Abstand aus den Abstandswerten des ersten Sensorpaares S1, S2 und ein zweiter mittlerer Abstand aus den Abstandswerten des zweiten Sensorpaares S3, S4 ermittelt wird, wobei eine erste Änderung $\Delta d1$ des ersten mittleren Abstandes und eine zweite Änderung $\Delta d2$ des zweiten mittleren Abstandes erfasst werden, wobei die Änderungen $\Delta d1$, $\Delta d2$ der mittleren Abstände verglichen werden, wobei, sobald ein Unterschied der mittleren Abstandsänderungen $\Delta d1$, $\Delta d2$ einen Grenzwert über-schreitet, ein Warnsignal ausgegeben wird.

**Patentansprüche**

1. Verfahren zur Überwachung einer Magnetlagervorrichtung (14) für eine elektrische rotierende Maschine (2), aufweisend ein erstes Paar zumindest im Wesentlichen diametral gegenüberliegender Sensoren (S1, S2) und ein zweites Paar zumindest im Wesentlichen diametral gegenüberliegender Sensoren (S3, S4), welche zum ersten Paar Sensoren (S1, S2) um einen Winkel ($\alpha$) versetzt angeordnet sind, wobei jeweils ein Abstand (d1, d2, d3, d4) eines Sensors (S1, S2, S3, S4) zu einem Drehkörper (20), welcher innerhalb der Sensorpaare (S1, S2, S3, S4) angeordnet ist, gemessen wird, wobei ein erster mittlerer Abstand aus den Abstandswerten des ersten Sensorpaares (S1, S2) und ein zweiter mittlerer Abstand aus den Abstandswerten des zweiten Sensorpaares (S3, S4) ermittelt wird, **dadurch gekennzeichnet, dass** eine erste Änderung ($\Delta d1$) des ersten mittleren Abstandes und eine zweite Änderung ($\Delta d2$) des zweiten mittleren Abstandes erfasst werden, wobei die Änderungen ($\Delta d1$, $\Delta d2$) der mittleren Abstände verglichen werden, wobei, sobald ein Unterschied der mittleren Abstandsänderungen ($\Delta d1$, $\Delta d2$) einen Grenzwert überschreitet, ein Warnsignal ausgegeben wird.

2. Verfahren nach Anspruch 1, wobei die Änderungen ($\Delta d1$, $\Delta d2$) auf eine vorhergehende Messung bezogen werden.

3. Verfahren nach Anspruch 2, wobei die vorhergehende Messung eine Kalibrierungsmessung ist.

4. Verfahren nach Anspruch 3, wobei die Position des Drehkörpers (20) bei der Kalibrierungsmessung so geregelt wird, dass die Abstände (d1, d2, d3, d4) der Sensoren (S1, S2, S3, S4) zum Drehkörper (20) gleich sind und einem Normabstand (d0) entsprechen.

5. Verfahren nach einem der vorherigen Ansprüche, wobei die Sensoren (S1, S2, S3, S4) als induktive Verschiebungssensoren ausgeführt sind, durch welche die Abstände (d1, d2, d3, d4) kontaktlos erfasst werden.

6. Verfahren nach einem der vorherigen Ansprüche, wobei das zweite Paar der diametral gegenüberliegenden Sensoren (S3, S4) um einen Winkel ($\alpha$) von 60° bis 120° zum ersten Paar der diametral gegenüberliegenden Sensoren (S1, S2) angeordnet wird.

7. Verfahren nach einem der vorherigen Ansprüche, wobei zumindest ein redundanter Sensor (R1, R2, R3, R4) im Bereich eines der Sensoren (S1, S2, S3, S4) angeordnet wird, wobei ein Abstand (e1, e2, e3, e4) des zumindest einen redundanten Sensors (R1, R2, R3, R4) zum Drehkörper (20) ermittelt wird.

8. Verfahren nach Anspruch 7, wobei ein fehlerhafter Sensor (S1, S2, S3, S4, R1, R2, R3, R4) durch einen Vergleich der ermittelten Abstände (d1, d2, d3, d4, e1, e2, e3, e4) detektiert wird.

9. Verfahren nach einem der vorherigen Ansprüche, wobei durch die Ausgabe des Warnsignals die elektrische rotierende Maschine (2) in einen sicheren Zustand überführt wird.

10. Steuereinheit (26) programmiert und mit Mitteln zur Durchführung eines Verfahrens nach einem der Ansprüche 1 bis 9.

**11.** Computerprogramm zur Durchführung eines Verfahrens nach einem der Ansprüche 1 bis 9 bei Ablauf in einer Steuereinheit (26) nach Anspruch 10.

**12.** Computerprogrammprodukt mit einem Computerprogramm nach Anspruch 11.

**13.** Sensorvorrichtung (18) zur Durchführung eines Verfahrens nach einem der Ansprüche 1 bis 9,
welche zumindest vier Sensoren (S1, S2, S3, S4) und eine Steuereinheit (26) nach Anspruch 10 aufweist.

**14.** Magnetlagervorrichtung (14) mit mindestens einem Magnetlager (16) und mindestens einer Sensorvorrichtung (18) nach Anspruch 13.

**15.** Elektrische rotierende Maschine (2) mit mindestens einer Magnetlagervorrichtung (14) nach Anspruch 14.

**Claims**

**1.** Method for monitoring a magnetic bearing device (14) for an electric rotating machine (2),
having a first pair of at least essentially diametrically opposed sensors (S1, S2) and
a second pair of at least essentially diametrically opposed sensors (S3, S4),
which are arranged offset by an angle ($\alpha$) with respect to the first pair of sensors (S1, S2),
wherein in each case a distance (d1, d2, d3, d4) between a sensor (S1, S2, S3, S4) and a body of rotation (20),
which is arranged within the sensor pairs (S1, S2, S3, S4), is measured,
wherein a first average distance is determined from the distance values of the first sensor pair (S1, S2) and a second
average distance is determined from the distance values of the second sensor pair (S3, S4),
**characterised in that** a first change ($\Delta d1$) in the first average distance and a second change ($\Delta d2$) in the second
average distance are captured,
wherein the changes ($\Delta d1$, $\Delta d2$) in the average distances are compared,
wherein once a difference in the average changes in distance ($\Delta d1$, $\Delta d2$) exceeds a limit value, a warning signal is
output.

**2.** Method according to claim 1,
wherein the changes ($\Delta d1$, $\Delta d2$) are related to a preceding measurement.

**3.** Method according to claim 2,
wherein the preceding measurement is a calibration measurement.

**4.** Method according to claim 3,
wherein the position of the body of rotation (20) during the calibration measurement is controlled such that the
distances (d1, d2, d3, d4) between the sensors (S1, S2, S3, S4) and the body of rotation (20) are equal and
correspond to a standard distance (d0).

**5.** Method according to one of the preceding claims,
wherein the sensors (S1, S2, S3, S4) are embodied as inductive displacement sensors, by means of which the
distances (d1,d2, d3, d4) are detected in a noncontact manner.

**6.** Method according to one of the preceding claims,
wherein the second pair of diametrically opposed sensors (S3, S4) is arranged about an angle ($\alpha$) of 60° to 120°
relative to the first pair of diametrically opposed sensors (S1, S2).

**7.** Method according to one of the preceding claims,
wherein at least one redundant sensor (R1, R2, R3, R4) is arranged in the region of one of the sensors (S1, S2,
S3, S4), wherein a distance (e1, e2, e3, e4) of the at least one redundant sensor (R1, R2, R3, R4) relative to the
body of rotation (20) is determined.

**8.** Method according to claim 7,
wherein a faulty sensor (S1, S2, S3, S4, R1, R2, R3, R4) is detected by comparing the determined distances (d1,
d2, d3, d4, e1, e2, e3, e4).

9. Method according to one of the preceding claims,
wherein the electric rotating machine (2) is moved into a safe state by outputting the warning signal.

10. Control unit (26) programmed and with means for carrying out a method according to one of claims 1 to 9.

11. Computer program for carrying out a method according to one of claims 1 to 9 when run in a control unit (26) according to claim 10.

12. Computer program product comprising a computer program according to claim 11.

13. Sensor device (18) for carrying out a method according to one of claims 1 to 9.
which has at least four sensors (S1, S2, S3, S4) and a control unit (26) according to claim 10.

14. Magnetic bearing device (14) having at least one magnetic bearing (16) and at least one sensor device (18) according to claim 13.

15. Electric rotating machine (2) with at least one magnetic bearing device (14) according to claim 14.


**Revendications**

1. Procédé de contrôle d'un dispositif (14) de palier magnétique d'une machine (2) électrique tournante, comportant
une première paire de capteurs (S1, S2) au moins sensiblement opposés diamétralement et
une deuxième paire de capteurs (S3, S4) au moins sensiblement opposés diamétralement,
qui sont décalés d'un angle ($\alpha$) par rapport à la première paire de capteurs (S1, S2),
dans lequel on mesure une distance (d1, d2, d3, d4) d'un capteur (S1, S2, S3, S4) à un corps (20) tournant qui est disposé à l'intérieur des paires (S1, S2, S3, S4) de capteur,
dans lequel on détermine une première distance moyenne à partir des valeurs de distance de la première paire (S1, S2) de capteur et une deuxième distance moyenne à partir des valeurs de distance de la deuxième paire (S3, S4) de capteur,
**caractérisé en ce que**
on relève une première variation ($\Delta$d1) de la première distance moyenne et une deuxième variation ($\Delta$d2) de la deuxième distance moyenne,
dans lequel on compare les variations ($\Delta$d1, $\Delta$d2) des distances moyennes,
dans lequel, dès qu'une différence entre les variations ($\Delta$d1, $\Delta$d2) de distances moyennes dépasse une valeur limite, on émet un signal d'alerte.

2. Procédé suivant la revendication 1,
dans lequel on rapporte les variations ($\Delta$d1, $\Delta$d2) à une mesure précédente.

3. Procédé suivant la revendication 2,
dans lequel la mesure précédente est une mesure d'étalonnage.

4. Procédé suivant la revendication 3,
dans lequel on règle la position du corps (20) tournant lors de la mesure d'étalonnage de manière à ce que les distances (d1, d2, d3, d4) des capteurs (S1, S2, S3, S4) au corps (20) tournant soient égales et correspondent à une distance (d0) de norme.

5. Procédé suivant l'une des revendications précédentes,
dans lequel les capteurs (S1, S2, S3, S4) sont réalisés sous la forme de capteurs inductifs de déplacement par lesquels on relève, sans contact, les distances (d1, d2, d3, d4).

6. Procédé suivant l'une des revendications précédentes,
dans lequel on décale la deuxième paire des capteurs (S3, S4) opposés diamétralement d'un angle ($\alpha$) de 60° à 120° par rapport à la première paire des capteurs (S1, S2) opposés diamétralement.

7. Procédé suivant l'une des revendications précédentes,
dans lequel on met au moins un capteur (R1, R2, R3, R4) redondant dans la région de l'un des capteurs (S1, S2, S3, S4), dans lequel on détermine une distance (e1, e2, e3, e4) du au moins un capteur (R1, R2, R3, R4) redondant au corps (20) tournant.

8. Procédé suivant la revendication 7,
   dans lequel on détecte un capteur (S1, S2, S3, S4, R1, R2, R3, R4) défectueux par une comparaison des distances (d1, d2, d3, d4, e1, e2, e3, e4) déterminées.

9. Procédé suivant l'une des revendications précédentes,
   dans lequel, par l'émission du signal d'alerte, on met la machine (2) électrique tournante dans un état sécurisé.

10. Unité (26) de commande programmée et ayant des moyens pour effectuer un procédé suivant l'une des revendications 1 à 9.

11. Programme d'ordinateur pour effectuer un procédé suivant l'une des revendications 1 à 9 lorsqu'il se déroule dans une unité (26) de commande suivant la revendication 10.

12. Produit de programme d'ordinateur ayant un programme d'ordinateur suivant la revendication 11.

13. Dispositif (18) de capteur pour effectuer un procédé suivant l'une des revendications 1 à 9,
   qui a au moins quatre capteurs (S1, S2, S3, S4) et une unité (26) de commande suivant la revendication 10.

14. Dispositif (14) de palier magnétique ayant au moins un palier (16) magnétique et au moins un dispositif (18) de capteur suivant la revendication 13.

15. Machine (2) électrique tournante ayant au moins un dispositif (14) de palier magnétique suivant la revendication 14.

FIG 1

EP 3 511 584 B1

# FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009039485 B4
- EP 2644917 A1
- DE 4215381 A1
- EP 3203191 A1